(19) Europäisches Patentamt / European Patent Office / Office européen des brevets

(11) **EP 4 130 695 A1**

(12) **EUROPEAN PATENT APPLICATION**
published in accordance with Art. 153(4) EPC

(43) Date of publication:
**08.02.2023 Bulletin 2023/06**

(21) Application number: **20926423.3**

(22) Date of filing: **25.03.2020**

(51) International Patent Classification (IPC):
**G01K 11/32** (1995.01)          **G01B 11/16** (1968.09)

(52) Cooperative Patent Classification (CPC):
**G01B 11/16; G01K 11/32**

(86) International application number:
**PCT/JP2020/013451**

(87) International publication number:
**WO 2021/192116 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **MIYASHITA, Masahiro
Tokyo 100-8310 (JP)**
• **UTSUMI, Shigeru
Tokyo 100-8310 (JP)**

(74) Representative: **Plasseraud IP
66, rue de la Chaussée d'Antin
75440 Paris Cedex 09 (FR)**

(54) **MEASUREMENT DEVICE**

(57) A cam portion (22) is attached to a first position (111) on a measurement target (110). A moving portion (24) is attached to a second position (112) on the measurement target (110) and is movable with respect to the cam portion (22) in an expanding/contracting direction of the measurement target (110). A strain portion (25) is attached to the moving portion (24) so as to fit along the measurement target (110), and is pressed against the cam portion (22). A strain of the strain portion (25) changes when the measurement target (110) expands or contracts and the moving portion moves (24) accordingly. An optical fiber sensor (10) has a temperature measurement portion (16) for measuring a temperature, and a strain measurement portion (17) for measuring a strain, and is attached to the strain portion (25).

Fig. 6

START-POINT SIDE

# Description

## Technical Field

The present disclosure relates to a technique of measuring a temperature and strain of a measurement target using an optical fiber sensor.

## Background Art

Patent Literature 1 describes a measurement method with which a multi-point optical fiber sensor which utilizes Fiber Bragg Grating (FBG) is covered with a protective material made of fiber, a resultant structure is integrated by solidification with a resin, and then the integrated structure is fixed to a measurement target such as a pipe with using a fastening band. According to this measurement method, since the optical fiber sensor is firmly fixed to the measurement target, the optical fiber sensor can follow behavior of the measurement target well and measure the temperature and strain accurately.

## Citation List

### Patent Literature

Patent Literature 1: JP 2013-104700 A

## Summary of Invention

## Technical Problem

According to the measurement method described in Patent Literature 1, it is necessary to form the optical fiber and the protective material into a shape of the measurement target in advance while positioning the sensor. Therefore, it is difficult to mount the resultant optical fiber sensor on a measurement target having a complicated shape such as a pipe in a refrigeration cycle or the like.

An objective of the present invention is to make it possible to easily detect a temperature and strain of even a measurement target having a complicated shape with an optical fiber sensor.

## Solution to Problem

A measurement device according to the present disclosure includes:

a cam portion attached to a first position on a measurement target;
a moving portion attached to a second position on the measurement target and movable with respect to the cam portion in an expanding/contracting direction of the measurement target;
a strain portion attached to the moving portion so as to fit along the measurement target, and pressed against the cam portion, the strain portion having a strain that changes when the measurement target expands or contracts and the moving portion moves accordingly;
a temperature-detection optical fiber sensor having a temperature measurement portion for measuring a temperature and attached to the strain portion; and
a strain-detection optical fiber sensor having a strain measurement portion for measuring a strain and attached to the strain portion.

## Advantageous Effects of Invention

In the present disclosure, an optical fiber sensor is attached to a strain portion which is attached to a moving portion movable in an expanding/contracting direction of a measurement target and which is pressed against a cam portion. As a result, a temperature and strain of even a measurement target having a complicated shape can be easily detected with the optical fiber sensor.

## Brief Description of Drawings

Fig. 1 is a configuration diagram of an optical fiber sensor 10 according to Embodiment 1.
Fig. 2 is an explanatory diagram of an FBG sensor portion 12 according to Embodiment 1.
Fig. 3 is a graph illustrating characteristics of a reflection spectrum obtained in the FBG sensor portion 12 according to Embodiment 1.
Fig. 4 is a diagram illustrating an example of a calibration curve of a temperature and wavelength according to Embodiment 1, and an example of a calibration curve of a strain and wavelength according to Embodiment 1.
Fig. 5 is a configuration diagram of a measurement system 100 according to Embodiment 1.
Fig. 6 is a configuration diagram of a measurement device 20 according to Embodiment 1.
Fig. 7 is an explanatory diagram of how to arrange the optical fiber sensor 10 on a strain portion 25 according to Embodiment 1.
Fig. 8 is an explanatory diagram of how to attach the measurement device 20 according to Embodiment 1.
Fig. 9 is an explanatory diagram of an attaching tool 221 and an attaching tool 241 according to Embodiment 1.
Fig. 10 is an explanatory diagram of operations of the measurement device 20 according to Embodiment 1.

## Description of Embodiments

Embodiment 1.

*** Description of Configuration ***

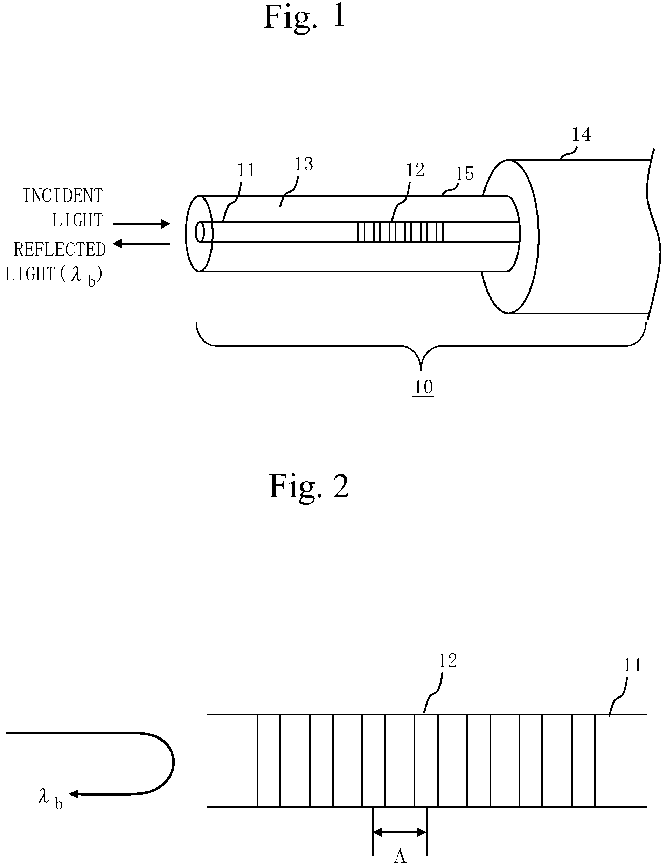

A configuration of an optical fiber sensor 10 according to Embodiment 1 will be described with referring to Figs. 1 to 4.

Optical fiber sensors include multi-point optical fiber sensors and distributed optical fiber sensors. A multi-point optical fiber sensor can perform measurement at a plurality of points which are set on one optical fiber. A distributed optical fiber sensor can perform measurement with one optical fiber consecutively. Measurement with an optical fiber uses light having a wide-band frequency or scattered light. Examples of the scattered light include, for example, Rayleigh scattered light, Brillouin scattered light, and Raman scattered light.

In Embodiment 1, the optical fiber sensor 10 is an optical fiber sensor in which Fiber Bragg Gratings (FBG) are used as a sensor portion.

As illustrated in Fig. 1, the optical fiber sensor 10 is provided with a core 11, an FBG sensor portion 12 formed in the core 11, a cladding 13 which covers a circumferential surface of the core, and a cover portion 14 which covers a circumferential surface of the cladding 13.

The FBG sensor portion 12 is employed when measuring a temperature with using a relationship between a Bragg wavelength and a temperature, and when measuring a strain with using a relationship between the Bragg wavelength and the strain. The FBG sensor portion 12 is arranged inside the core 11. Examples of a material that forms the cover portion 14 include, for example, an acrylate resin and a polyimide resin.

A cover-removed portion 15 where the circumferential surface of the cladding 13 is exposed is formed in the cover portion 14. The cover-removed portion 15 is formed in a region of the cover portion 14 that corresponds to the FBG sensor portion 12, in a direction of diameter of the optical fiber sensor 10. Therefore, that portion of the optical fiber sensor 10 where the FBG sensor portion 12 is arranged has a smaller size in the direction of diameter as compared to other portions of the optical fiber sensor 10.

An example of a size in the direction of diameter of a portion of the optical fiber sensor 10 where the cover portion 14 is present is 250 $\mu$m (micrometers). An example of a size in the direction of diameter of the cladding 13 is 125 $\mu$m. An example of a size in the direction of diameter of the core 11 is 10 $\mu$m. The FBG sensor portion 12 is arranged to extend in a range of about 5 mm (millimeters) of the core 11 in a longitudinal direction of the optical fiber sensor 10.

As illustrated in Fig. 2, the FBG sensor portion 12 is a modulating portion formed in the core 11 to have a periodic inflection index. Hence, a steep reflection spectrum characteristic can be obtained in the FBG sensor portion 12. In the FBG sensor portion 12, a refractive index of the core 11 changes with a period Λ.

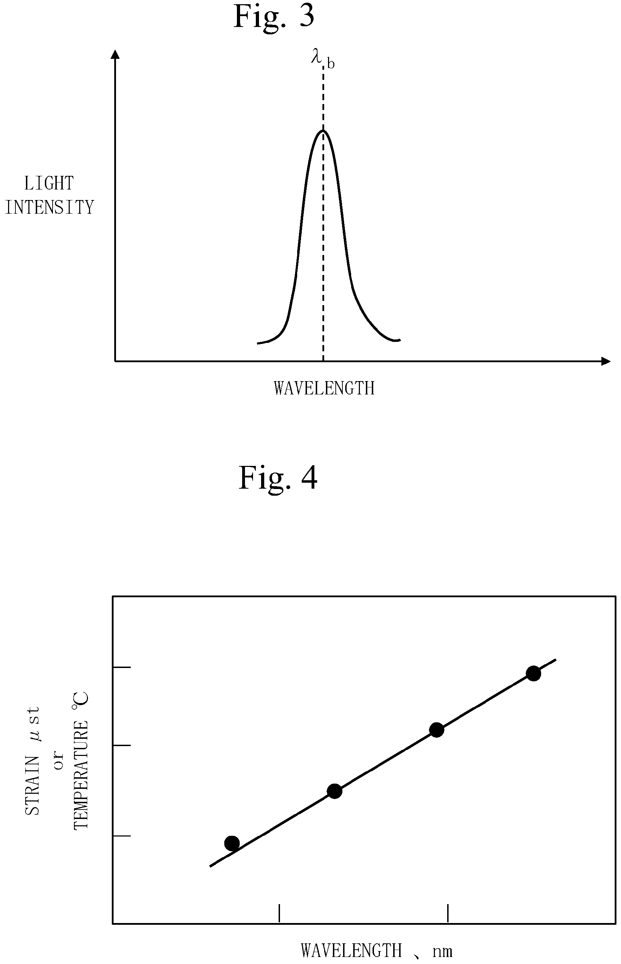

As illustrated in Fig. 3, a steep reflection spectrum is obtained in the FBG sensor portion 12. A light intensity is maximum at a central wavelength of the obtained reflection spectrum. In Fig. 3, the central wavelength of the reflection spectrum is Bragg wavelength $\lambda_b$.

A relationship among the Bragg wavelength $\lambda_b$, the period Λ, and a refractive index n is expressed by following Formula 1.

$$(\text{Formula } 1)$$

$$\lambda_b = 2n\Lambda$$

The refractive index n changes depending on a temperature of an optical fiber. The period Λ changes depending on the temperature and strain of the optical fiber.

Therefore, when measuring a temperature, a strain of the measurement target should not be transmitted to the optical fiber, and a relationship between a change in Bragg wavelength $\lambda_b$ and a change in temperature is measured in advance as illustrated in Fig. 4, so that a temperature of a measurement target can be measured. On the other hand, when measuring a strain, a temperature of a vicinity of the measurement target is obtained, and a wavelength change caused by the temperature is subtracted from the change in Bragg wavelength $\lambda_b$. As a result, a change in Bragg wavelength $\lambda_b$ that corresponds to only a change in strain can be obtained, so that the strain of the measurement target can be measured.

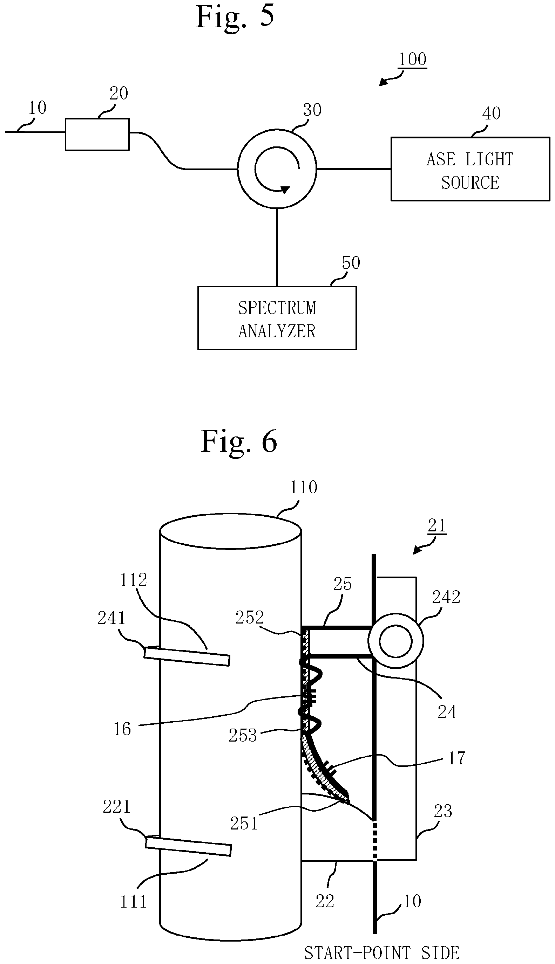

A configuration of a measurement system 100 according to Embodiment 1 will be described with referring to Fig. 5.

The measurement system 100 is provided with a measurement device 20 having the optical fiber sensor 10, an optical circulator 30, an Amplified Spontaneous Emission (ASE) light source 40, and a spectrum analyzer 50.

The measurement device 20 is provided with the optical fiber sensor 10 and attaches the optical fiber sensor 10 to a measurement target. The optical circulator 30 is connected to a longitudinal-direction end portion of the optical fiber sensor 10. The optical circulator 30 transforms an optical path. The ASE light source 40 emits light having a frequency in a relatively wide band. The ASE light source 40 is connected to the optical circulator 30. Light emitted from the ASE light source 40 enters the optical circulator 30. The spectrum analyzer 50 is a wavelength measurement device. The spectrum analyzer 50 is connected to the optical circulator 30. Light enters the spectrum analyzer 50 via the optical circulator 30.

The measurement system 100 converts the Bragg wavelength $\lambda_b$ obtained with the spectrum analyzer 50 into a temperature and a strain. Hence, the temperature and strain of the measurement target are identified.

A configuration of the measurement device 20 according to Embodiment 1 will be described with referring to Figs. 6 through 9.

The measurement device 20 is provided with the optical fiber sensor 10 and an attaching device 21. The attaching device 21 is a device that attaches the optical fiber sensor 10 to a measurement target 110. The attaching device 21 is provided with a cam portion 22, a rail portion 23, a moving portion 24, and a strain portion 25.

In Embodiment 1, the measurement target 110 is a pipe employed in an apparatus such as a refrigeration cycle and an artificial satellite. The measurement target 110 is not limited to a pipe but can be anything that is a target whose temperature and strain are to be measured. In Embodiment 1, there is a possibility that a strain occurs in the measurement target 110 in the longitudinal direction, that is, there is a possibility that the measurement target 110 expands and contracts in the longitudinal direction.

The cam portion 22 is attached to a first position 111 on the measurement target 110. In Fig. 6, the cam portion 22 is attached to the first position 111 by an attaching tool 221. As that surface of the cam portion 22 against which the strain portion 25 to be described later is pressed separates from the measurement target 110, the cam portion 22 moves away from the moving portion 24. In Embodiment 1, the surface against which the strain portion 25 is pressed is a curved surface.

The rail portion 23 is attached to the cam portion 22 so as to be parallel to the longitudinal direction of the measurement target 110.

The moving portion 24 is attached to a second position 112 on the measurement target 110, and is attached to the rail portion 23 so as to be movable along the rail portion 23. As being attached be movable along the rail portion 23, the moving portion 24 is movable with respect to the cam portion 22 in an expanding/contracting direction of the measurement target.

In Fig. 6, the moving portion 24 is attached to the second position 112 by an attaching tool 241. In Fig. 6, the moving portion 24 is attached to the rail portion 23 via a rotating portion 242. In Fig. 6, when the measurement target 110 expands or contracts and the rotating portion 242 rotates accordingly, the moving portion 24 moves along the rail portion 23. The moving portion 24 may have another structure such that it moves by sliding as being guided by the rail portion 23.

The strain portion 25 is attached to the moving portion 24 so as to fit along the measurement target 110, and is pressed against the cam portion 22. A strain of the strain portion 25 changes when the measurement target 110 expands or contracts and the moving portion 24 moves accordingly.

In Embodiment 1, the strain portion 25 is a plate spring. In Embodiment 1, the strain portion 25 which is a plate spring is attached to the moving portion 24 such that a distal end portion 251 is pressed against the cam portion 22 and that a base portion 252 through to a middle portion 253 are in contact with the measurement target 110. Hence, when the measurement target 110 expands or contracts and the moving portion 24 moves accordingly, a strain of the plate spring near the distal end portion 251 is changed by the cam portion 22.

In Embodiment 1, the optical fiber sensor 10 is formed of one optical fiber. The optical fiber sensor 10 has two types of FBG sensor portions 12 which are a temperature measurement portion 16 for measuring a temperature and a strain measurement portion 17 for measuring a strain. That is, in Embodiment 1, one optical fiber sensor 10 serves as a temperature-detection optical fiber sensor having the temperature measurement portion 16, and as a strain-detection optical fiber sensor having the strain measurement portion 17.

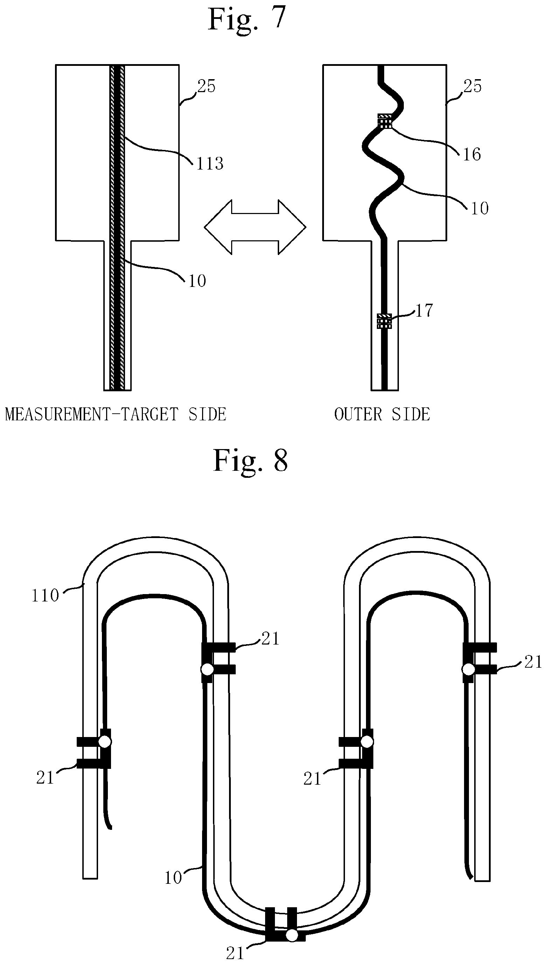

The optical fiber sensor 10 is attached to the strain portion 25 such that the temperature measurement portion 16 is located between the base portion 252 and the middle portion 253 of the strain portion 25 and that the strain measurement portion 17 is located between the middle portion 253 and the distal end portion 251. In this attaching, as illustrated in Fig. 7, the optical fiber sensor 10 is attached to the strain portion 25 such that a portion near the temperature measurement portion 16 is deflected. Also, the optical fiber sensor 10 is attached to the strain portion 25 such that a portion near the strain measurement portion 17 is not deflected and that the strain measurement portion 17 is in contact with the strain portion 25.

The optical fiber sensor 10 may be deflected near the temperature measurement portion 16 to form waves, or to be circular. When the optical fiber sensor 10 is deflected, the temperature measurement portion 16 may separate apart from the measurement target 110, and cannot measure the temperature accurately. In view of this, it is desired to apply grease or the like near the temperature measurement portion 16 to fill a gap between the temperature measurement portion 16 and the strain portion 25. In this case, an adhesive or the like should not be applied so the temperature measurement portion 16 will not be completely fixed to the strain portion 25.

A strain is identified by subtracting a wavelength change caused by temperature from a change in Bragg wavelength $\lambda_b$ detected by the strain measurement portion 17. For this purpose, it is necessary to identify a temperature in a vicinity of the strain measurement portion 17. Therefore, the strain measurement portion 17 is arranged in a vicinity of the temperature measurement portion 16.

The strain occurring in the strain portion 25 which is a plate spring must be transmitted to the strain measurement portion 17. Therefore, the strain measurement portion 17 is completely fixed to the strain portion 25 with an adhesive or the like. However, the strain measurement portion 17 is fixed to the strain portion 25 and not directly to the measurement target 110. Hence, the optical fiber sensor 10 can be used repeatedly by removing the measurement device 20 from the measurement target 110 and attaching it to another measurement target 110.

The strain portion 25 is formed of a material of high thermal conductivity in order to prevent heat conducted to the strain portion 25 from dissipating. Meanwhile, elements provided to the attaching device 21, excluding the strain portion 25, are formed of a material of low thermal conductivity. In Embodiment 1, the strain portion 25 has a thermal conductivity of 200 W/m·K (watt/meter·kelvin) or more, and the elements provided to the attaching device 21, excluding the strain portion 25, have a thermal conductivity of 20 W/m·K or less. An example of the material of high thermal conductivity is copper. Examples of the material of low conductivity are a fiber reinforced plastic, a ceramic, and wood.

The strain portion 25 has a high rigidity in its part between the base portion 252 and middle portion 253 where the temperature measurement portion 16 is arranged, and a low rigidity in its part between the middle portion 253 and distal end portion 251 where the strain measurement portion 17 is arranged. Hence, the portion where the temperature measurement portion 16 is arranged does not separate from the measurement target 110 easily, and a strain occurs easily in the portion where the strain measurement portion 17 is arranged.

To raise the rigidity, the width may be increased, as illustrated in Fig. 7. Alternatively, the thickness may be increased. Inversely, to lower the rigidity, the width may be decreased, as illustrated in Fig. 7. Alternatively, the thickness may be decreased.

Alternatively, the strain portion 25 which is a plate spring may be warped toward the measurement target 110 in advance. Then, when the measurement device 20 is attached to the measurement target 110, the strain portion 25 which is a plate spring is automatically pressed against the measurement target 110, and the portion in the strain portion 25 where the temperature measurement portion 16 is arranged comes into contact with the measurement target 110 easily.

As illustrated in Fig. 6, the optical fiber sensor 10 is arranged to extend from a start-point side along the rail portion 23 and the moving portion 24. Subsequently, as illustrated in Figs. 6 and 7, the optical fiber sensor 10 is arranged to extend from the moving portion 24 along an outer side of the strain portion 25. When arranging the optical fiber sensor 10, the temperature measurement portion 16 is arranged between the base portion 252 and the middle portion 253 on the outer side of the strain portion 25, and the strain measurement portion 17 is arranged between the middle portion 253 and the distal end portion 251 on the outer side of the strain portion 25. Subsequently, the optical fiber sensor 10 is arranged to go around from the distal end portion 251 of the strain portion 25 to the measurement target 110 side of the strain portion 25, and then to extend via the measurement target 110 side of the strain portion 25 as far as to the moving portion 24. Then, the optical fiber sensor 10 is arranged along the moving portion 24 and the rail portion 23. After that, the optical fiber sensor 10 is arranged to extend from a start-point side of a next attaching device 21 along a rail portion 23 and a moving portion 24.

When arranging the optical fiber sensor 10 along the rail portion 23, the moving portion 24, and the strain portion 25, the optical fiber sensor 10 must be bent. In this bending, the bend is desirably rounded so that a radius of curvature of the optical fiber sensor 10 does not become excessively small.

As illustrated in Fig. 8, the measurement device 20 is attached to a complicatedly bent pipe which is the measurement target 110.

In Fig. 8, a measurement device 20 is provided with a plurality of attaching devices 21. An optical fiber sensor 10 has a plurality of pairs each consisting of a temperature measurement portion 16 and a strain measurement portion 17. The plurality of pairs each consisting of the temperature measurement portion 16 and the strain measurement portion 17 are attached to strain portions 25 of the plurality of attaching devices 21 individually. Then, each of the plurality of attaching devices 21 is attached to the measurement target 110.

Thus, a temperature and strain at a plurality of locations of the measurement target 110 can be measured with one optical fiber sensor 10.

In Embodiment 1, when the measurement device 20 is attached to the measurement target 110, the temperature measurement portion 16 and the strain measurement portion 17 are arranged on a surface opposite to the measurement target 110 so as not to damage the optical fiber sensor 10.

In Embodiment 1, the optical fiber sensor 10 extends also on the measurement target 110 side of the strain portion 25. A groove 113 is formed in a measurement target 110-side surface of the strain portion 25, and the optical fiber is placed to run in the groove 113. Therefore, the optical fiber sensor 10 will not be damaged even on the measurement target 110 side of the strain portion 25.

A single optical fiber sensor 10 can be fractured easily. Therefore, it is desirable to attach the optical fiber sensor 10 to the attaching device 21 after taking measures such as coating a circumferential surface of the optical fiber sensor 10 or putting the optical fiber sensor 10 in a protection tube.

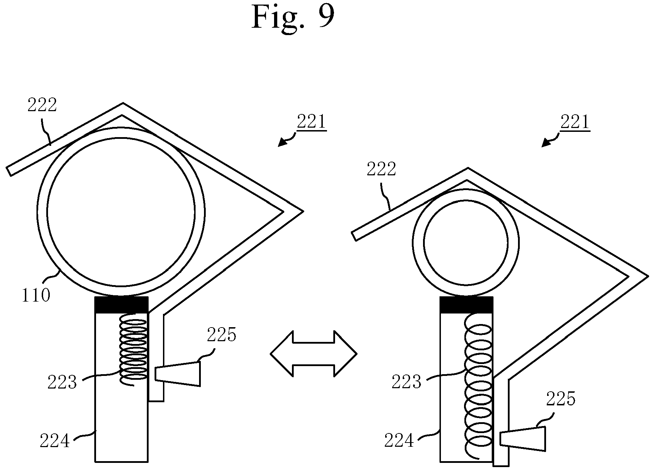

A configuration of the attaching tool 221 and a configuration of the attaching tool 241 which are according to Embodiment 1 will be described with referring to Fig. 9.

The attaching tool 221 and the attaching tool 241 are devices for attaching the attaching device 21 to the measurement target 110. Fig. 9 illustrates the configuration of the attaching tool 221. The attaching tool 241 has the same configuration as that of the attaching tool 221. The attaching tool 221 will be described hereinbelow.

The distal end 222 of the attaching tool 221 is formed into a hook-like shape. The attaching tool 221 draws the hook-like distal end 222 with a spring 223 toward a handle 224 side. Thus, the attaching device 21 can be attached either to a large measurement target 110 as illustrated on a left side of Fig. 9, or to a small measurement target 110 as illustrated on a right side of Fig. 9. When attaching the attaching device 21, a lever 225 may be pulled toward the measurement target 110 side to open wide the hook-like distal end 222, and the measurement target 110 may be pinched between the hook-like distal end 222 and the handle 224.

If a size of the measurement target 110 is almost constant, the attaching tool 221 may have a clothespin-like shape.

*** Description of Operations ***

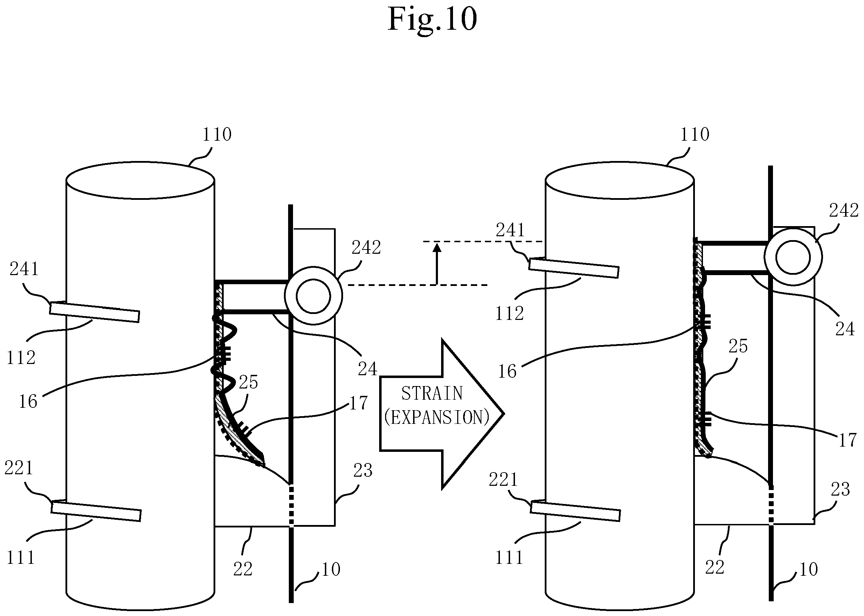

Operations of the measurement device 20 according to Embodiment 1 will be described with referring to Fig. 10.

Assume that at the time point the measurement device 20 is attached to the measurement target 110, the measurement device 20 is in a state on the left side of Fig. 10. Assume that a portion between the first position 111 and the second position 112 of the measurement target 110 then expands.

Now the measurement device 20 is in a state on the right side of Fig. 10. That is, as the measurement target 110 expands, the moving portion 24 attached to the second position 112 moves accordingly in a direction to separate from the cam portion 22. This changes a strain of the strain portion 25 which is a plate spring. As a result, a Bragg wavelength $\lambda_b$ detected by the strain measurement portion 17 changes. The measurement system 100 subtracts a wavelength change caused by a temperature detected by the temperature measurement portion 16 from a change in Bragg wavelength $\lambda_b$, thereby identifying the strain of the measurement target 110.

The temperature measurement portion 16 detects a change in Bragg wavelength $\lambda_b$ caused by a change in temperature of the measurement target 110.

The optical fiber sensor 10 is arranged to be deflected near the temperature measurement portion 16. Therefore, when the portion between the first position 111 and second position 112 of the measurement target 110 expands to show a state on the right side of Fig. 10, deflection of the optical fiber sensor 10 is straightened in accordance with the expansion of the measurement target 110, so the temperature measurement portion 16 is prevented from separating from the strain portion 25. That is, near the temperature measurement portion 16, the deflection prevents the optical fiber sensor 10 from following a change in strain. As a result, even in the state on the right side of Fig. 10, appropriate temperature measurement can be performed.

Fig. 10 illustrates a case where the measurement target 110 expands. However, the temperature and strain can be measured even when the measurement target 110 contracts.

Specifically, when the measurement target 110 contracts, the moving portion 24 attached to the second position 112 moves in a direction to come close to the cam portion 22 in accordance with the contraction of the measurement target 110. Hence, the strain of the strain portion 25 which is a plate spring changes. Consequently, a Bragg wavelength $\lambda_b$ detected by the strain measurement portion 17 changes. The measurement system 100 subtracts a wavelength change caused by the temperature detected by the temperature measurement portion 16 from the change in Bragg wavelength $\lambda_b$, thereby identifying the strain of the measurement target 110.

*** Effect of Embodiment 1 ***

As described above, in the measurement device 20 according to Embodiment 1, the optical fiber sensor 10 is attached to the strain portion 25 which is attached to the moving portion 24 and pressed against the cam portion 22, the moving portion 24 being movable in the expanding/contracting direction of the measurement target 110. Hence, a temperature and strain at a plurality of locations of even a measurement target 110 having a complicated shape can be easily measured with the optical fiber sensor 10.

Also, in the measurement device 20 according to Embodiment 1, the temperature measurement portion 16 and the strain measurement portion 17 are arranged near to each other, so that the temperature and the strain can be measured separately.

In particular, in the measurement device 20 according to Embodiment 1, the optical fiber sensor 10 is arranged to be deflected near the temperature measurement portion 16. This prevents the temperature measurement portion 16 from being influenced by the strain, so that the temperature measurement portion 16 can measure the temperature appropriately. As a result, the strain can be measured appropriately.

For example, pipes are loaded in various types of products ranging from artificial satellites to consumer products such as air-conditioners. To design heat and structure of a product, a temperature and strain of a pipe must be measured at a high density. However, a conventional thermocouple and a strain gauge can perform measurement only at a single point. When measurement points increase, wiring becomes complicated, and man-hours due to attaching and detaching increase. In contrast to this, the measurement device 20 according to Embodiment 1 can measure the temperature and strain at a plurality of locations of even a complicated-shape measurement target 110 such as a pipe, easily and accurately.

*** Other Configurations ***

< Modification 1 >

In Embodiment 1, a pipe is employed as the measurement target 110. However, the measurement target 110 is not limited to a pipe, and may be another thing whose temperature and strain need be measured.

< Modification 2 >

In Embodiment 1, the optical fiber sensor 10 provided with the FBG sensor portion 12 is employed. However, the optical fiber sensor 10 is not limited to one provided with an FBG sensor portion 12, but can be another multi-point optical fiber sensor or a distributed optical fiber.

< Modification 3 >

In Embodiment 1, one optical fiber sensor 10 serves as a temperature-detection optical fiber sensor having the temperature measurement portion 16 and as a strain-detection optical fiber sensor having the strain measurement portion 17. However, the temperature-detection optical fiber sensor having the temperature measurement portion 16 and the strain-detection optical fiber sensor having the strain measurement portion 17 may be separate optical fiber sensors.

< Modification 4 >

With referring to Fig. 8, a case has been described where a temperature and strain at a plurality of locations of one measurement target 110 are measured with using one optical fiber sensor 10. However, a temperature and strain at a plurality of locations of one measurement target 110 may be measured with using a plurality of optical fiber sensors 10. For example, a temperature-measurement optical fiber sensor 10 and a strain-measurement optical fiber sensor 10 may be prepared separately, as has been described in Modification 3. Also, a certain optical fiber sensor 10 may be arranged at some section of a measurement target 110, and other optical fiber sensors 10 may be arranged at remaining sections of the measurement target 110.

**Reference Signs List**

10: optical fiber sensor; 11: core; 12: FBG sensor portion; 13: cladding; 14: cover portion; 15: cover-removed portion; 16: temperature measurement portion; 17: strain measurement portion; 20: measurement device; 21: attaching device; 22: cam portion; 221: attaching tool; 222: distal end; 223: spring; 224: handle; 225: lever; 23: rail portion; 24: moving portion; 241: attaching tool; 25: strain portion; 251: distal end portion; 252: base portion; 253: middle portion; 30: optical circulator; 40: ASE light source; 50: spectrum analyzer; 100: measurement system; 110: measurement target; 111: first position; 112: second position; 113: groove.

**Claims**

1.  A measurement device comprising:

    a cam portion attached to a first position on a measurement target;
    a moving portion attached to a second position on the measurement target and movable with respect to the cam portion in an expanding/contracting direction of the measurement target;
    a strain portion attached to the moving portion so as to fit along the measurement target, and pressed against the cam portion, the strain portion having a strain that changes when the measurement target expands or contracts and the moving portion moves accordingly;
    a temperature-detection optical fiber sensor having a temperature measurement portion for measuring a temperature and attached to the strain portion; and
    a strain-detection optical fiber sensor having a strain measurement portion for measuring a strain and attached to the strain portion.

2.  The measurement device according to claim 1, wherein the temperature-detection optical fiber sensor is attached to the strain portion so as to be deflected near the temperature measurement portion.

3.  The measurement device according to claim 1 or 2, wherein the strain-detection optical fiber sensor is attached to the strain portion such that the strain measurement portion is in contact with the strain portion.

4.  The measurement device according to any one of claims 1 to 3,

    wherein the strain portion is a plate spring in which a distal end portion is pressed against the cam portion and a base portion through to a middle portion are in contact with the measurement target,
    wherein the temperature-detection optical fiber sensor is attached such that the temperature measurement portion is located between the base portion and the middle portion, and
    wherein the strain-detection optical fiber is attached such that the strain measurement portion is located between the middle portion and the distal end portion.

5.  The measurement device according to claim 4,

wherein the plate spring has a rigidity that is low between the middle portion and the distal end portion as compared to a rigidity between the base portion and the middle portion.

6. The measurement device according to any one of claims 1 to 5,
wherein the strain portion has a higher thermal conductivity compared to the cam portion and the moving portion.

7. The measurement device according to any one of claims 1 to 6, further comprising

a rail portion attached to the cam portion so as to be parallel to the measurement target,
wherein the moving portion is attached to the second position on the measurement target, and is attached to the rail portion so as to be movable along the rail portion.

8. The measurement device according to any one of claims 1 to 7, comprising a plurality of attaching devices each having the cam portion, the moving portion, and the strain portion,

wherein one optical fiber sensor forms the temperature-detection optical fiber sensor and the strain-detection optical fiber sensor, and
wherein said one optical fiber sensor has a plurality of pairs each consisting of the temperature measurement portion and the strain measurement portion, and the plurality of pairs are attached to the strain portions of the plurality of attaching devices individually.

# Fig. 1

# Fig. 2

# Fig. 3

LIGHT INTENSITY — WAVELENGTH — $\lambda_b$

# Fig. 4

STRAIN $\mu$ st or TEMPERATURE °C — WAVELENGTH 、nm

# Fig. 5

# Fig. 6

START-POINT SIDE

# Fig. 7

MEASUREMENT-TARGET SIDE     OUTER SIDE

# Fig. 8

# Fig. 9

# Fig.10

## INTERNATIONAL SEARCH REPORT

| International application No. |
| --- |
| PCT/JP2020/013451 |

**A. CLASSIFICATION OF SUBJECT MATTER**
G01K 11/32(2006.01)i; G01B 11/16(2006.01)i
FI: G01K11/32 D; G01B11/16 G

According to International Patent Classification (IPC) or to both national classification and IPC

**B. FIELDS SEARCHED**

Minimum documentation searched (classification system followed by classification symbols)
G01K11/32; G01B11/16; G01D5/353; G01L1/24

Documentation searched other than minimum documentation to the extent that such documents are included in the fields searched
Published examined utility model applications of Japan    1922–1996
Published unexamined utility model applications of Japan  1971–2020
Registered utility model specifications of Japan          1996–2020
Published registered utility model applications of Japan  1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2007/043716 A1 (PARK, Hyun-Soo) 19 April 2007 (2007-04-19) paragraphs [0025]-[0043], [0064]-[0068], fig. 1, 8 | 1-8 |
| A | JP 2012-88155 A (HITACHI, LTD.) 10 May 2012 (2012-05-10) paragraphs [0010]-[0018], fig. 1-3 | 1-8 |
| A | JP 2002-162211 A (MITSUBISHI HEAVY INDUSTRIES, LTD.) 07 June 2002 (2002-06-07) | 1-8 |
| A | JP 2003-65730 A (HITACHI CABLE, LTD.) 05 March 2003 (2003-03-05) | 1-8 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 June 2020 (22.06.2020) | 07 July 2020 (07.07.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2020/013451

| Patent Documents referred in the Report | Publication Date | Patent Family | Publication Date |
|---|---|---|---|
| WO 2007/043716 A1 | 19 Apr. 2007 | (Family: none) | |
| JP 2012-88155 A | 10 May 2012 | (Family: none) | |
| JP 2002-162211 A | 07 Jun. 2002 | (Family: none) | |
| JP 2003-65730 A | 05 Mar. 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013104700 A